# EUROPEAN PATENT APPLICATION

(11) **EP 3 343 804 A1**
(43) Date of publication of application: **04.07.2018**
(21) Application number: 16838789.2
(22) Date of filing: 18.08.2016
(51) Int. Cl.: H04B 10/294

(54) **EQUALIZER, REPEATER, AND COMMUNICATION SYSTEM**

(30) Priority: 27.08.2015 JP 2015167396
(71) Applicant: NEC Corporation, Tokyo 108-8001 (JP)
(72) Inventor: INADA, Koji, Tokyo 108-8001 (JP)
(74) Representative: Robson, Aidan John
(86) International application number: PCT/JP2016/003762
(87) International publication number: WO 2017/033438

(57) **Abstract**

In order to enable easy adjustment of loss wavelength characteristics in accordance with the characteristics of a wavelength division multiplex optical signal, and the usage environment of an EDFA, etc., an equalizer 10 is provided with: a wavelength selection switch unit 20 that adds a loss profile that has been set to an inputted wavelength division multiplex optical signal, and outputs the same; and a setting unit 30 that sets the loss profile to a wavelength selection switch means on the basis of obtained setting information. The setting information is information for flattening the spectrum of the outputted wavelength division multiplex optical signal.

## Description

### [Technical Field]

The present invention relates to an equalizer, a repeater and a communication system.

### [Background Art]

In a submarine communication system and other similar systems, a wavelength division multiplexed (WDM) light signal is used often in order to send and receive a great deal of information. When a WDM light signal is transmitted over a long distance in a submarine communication system or the like, a repeater device having an amplifier is arranged on an optical cable generally, and the light intensity of the WDM light signal is amplified in the repeater device.

Here, as an amplifier to be installed in a submarine communication system, there is an erbium doped fiber amplifier (EDFA: Erbium Doped Fiber Amplifier). Since an EDFA has wavelength dependency in its amplifying characteristics, an equalizer to equalize the wavelength dependency of the EDFA is generally arranged together with the EDFA when the light intensity of a WDM light signal is amplified using the EDFA.

For example, in Patent Literature 1, there is proposed that, in a super-long-distance submarine optical amplification repeater transmission system, an equalizer including three filters which indicate characteristics opposite to the amplifying characteristics of an EDFA in total in the subsequent stage of the EDFA.

### [Citation List]

### [Patent Literature]

[PTL 1]
Japanese Patent Application Laid-Open No. 1997-244079

### [Summary of Invention]

### [Technical Problem]

With expansions of submarine communication systems in recent years, cases in which, even in one system, there is an increasing number of cases where light intensity or communication bands of light signal, operating temperatures or the like vary even within the same system. Since amplifying characteristics of an EDFA change according to the light intensity of a light signal, the communication band and operating temperatures, the characteristics of equalizers need to be changed according to an environment where each EDFA is used when the equalizers are installed in the same system.

In other words, equalizers need to be prepared according to the number of specifications of EDFAs, and furthermore spare equalizers need to be prepared respectively to those equalizers. In this case, the cost of the system becomes high.

The present invention has been made in view of the above issue, and its object is to provide an equalizer, a repeater and a communication system that facilitate adjustment of loss-wavelength characteristics in response to the characteristics of a wavelength division multiplexed optical signal, the usage environment and the like.

### [Solution to Problem]

In order to achieve the above object, an equalizer according to the present invention includes: a wavelength selection switch means for outputting an inputted wavelength division multiplexed optical signal after adding a loss profile having been set; and a setting means for setting a loss profile to the wavelength selection switch means based on acquired setting information, and the setting information is information for flattening a spectrum of the outputted wavelength division multiplexed optical signal.

In order to achieve the above-mentioned object, a repeater according to the present invention includes: an amplifying means for amplifying light intensity of a wavelength division multiplexed optical signal inputted and outputting the amplified wavelength division multiplexed optical signal; an equalizer including a wavelength selection switch means for adding a loss profile having been set to the wavelength division multiplexed optical signal inputted and outputting the loss-profile-added wavelength division multiplexed optical signal, and a setting means for acquiring setting information that is information for flattening a spectrum of a wavelength division multiplexed optical signal to be outputted from the repeater and updating the loss profile set to the wavelength selection switch means based on the setting information; and a chassis containing in its interior the amplifier and the equalizer arranged in a cascade manner, and the setting information is information for flattening a spectrum of a wavelength division multiplexed optical signal outputted from the repeater.

In order to achieve the above-mentioned object, a communication system according to the present invention includes: an amplifying means for amplifying light intensity of a wavelength division multiplexed optical signal inputted and outputting the amplified wavelength division multiplexed optical signal; an equalizer including a wavelength selection switch means for adding to the inputted wavelength division multiplexed optical signal a loss profile having been set and outputting the loss-profile-added wavelength division multiplexed optical signal and a setting means for updating the loss profile having been set to the wavelength selection switch means based on the acquired setting information, and the amplifier and the equalizer are arranged in a cascade manner, and the setting information is information for flattening a spectrum of a wavelength division multiplexed optical signal having passed the amplifying means and the wavelength selection switch means.

### [Advantageous Effects of Invention]

According to the aforementioned aspects of the present invention mentioned above, the loss-wavelength characteristic of an equalizer can be adjusted easily according to the usage environment of an EDFA, the characteristics of a wavelength division multiplexed optical signal, and the like.

### [Brief Description of Drawings]

[FIG. 1] FIG. 1 is a system configuration of an equalizer 10 according to a first example embodiment.
[FIG. 2] FIG. 2 is a system configuration of a communication system 100 according to a second example embodiment.
[FIG. 3] FIG. 3 is a block diagram of an equalizer 300 according to the second example embodiment.
[FIG. 4] FIG. 4 is a block diagram of a repeating device 400 according to the second example embodiment.
[FIG. 5] FIG. 5 is a diagram illustrating a change in a spectrum when a WDM light signal passes the communication system 100.
[FIG. 6] FIG. 6 is a block diagram of an equalizer 300B according to a third example embodiment.
[FIG. 7] FIG. 7 is a block diagram of an equalizer 300C according to a fourth example embodiment.
[FIG. 8] FIG. 8 is a system configuration of a communication system 100B according to a fifth example embodiment.

### [Description of Embodiments]

### First Example Embodiment

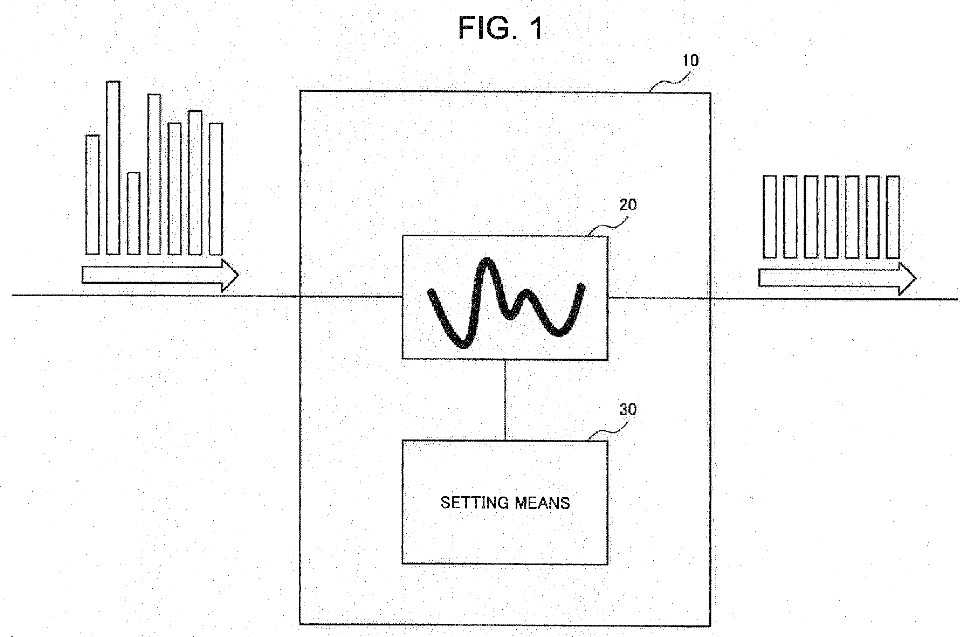

The first example embodiment of the present invention will be described. A block diagram of an equalizer according to the present example embodiment is illustrated in FIG. 1. The equalizer 10 of FIG. 1 includes a wavelength selection switch means 20 and a setting means 30. A wavelength division multiplexing (WDM: Wavelength Division Multiplexing) light signal to which wavelength dependency has been added is inputted to the equalizer 10, and the wavelength dependency added to the inputted WDM light signal is equalized.

By switching a light signal for each wavelength, the wavelength selection switch means 20 adjusts the loss-wavelength characteristic of an inputted WDM light signal flexibly. In the wavelength selection switch means 20 according to the present example embodiment, a loss profile is set by setting means 30, and, the wavelength selection switch means 20 adds the loss profile having been set to an inputted WDM light signal by switching the light signal for each wavelength based on the loss profile having been set. As a result, the wavelength dependency added to the WDM light signal is equalized.

The setting means 30 acquires setting information and sets to the wavelength selection switch means 20 a loss profile according to the setting information having been acquired. Here, the setting means 30 acquires setting information for equalizing wavelength dependency added to a WDM light signal to be inputted to the equalizer 10. Every time setting information is acquired, the setting means 30 sets a loss profile according to the acquired setting information to the wavelength selection switch means 20.

By applying the wavelength selection switch means 20, an equalizer constituted as mentioned above can set a desired loss profile to the wavelength selection switch means 20 easily. Further, by switching a light signal for each wavelength based on a loss profile set in the wavelength selection switch means 20, the most suitable loss profile can be added to a WDM light signal certainly.

Accordingly, even if there is a change in the characteristics of a WDM light signal, the usage environment, and the like, the equalizer 10 according to the present example embodiment can set the most suitable loss profile according to the change to the wavelength selection switch means 20 easily, and can add the loss profile to a WDM light signal of an equalization target certainly. Furthermore, a low cost system can be provided because a plurality of equalizers designed for each of the characteristics and usage environments of WDM light signals do not need to be held.

Meanwhile, the wavelength selection switch means 20 is not limited to one in which a wavelength selection switch is composed as a single component, and, for example, a structure in which an Arrayed Waveguide Grating (AWG) and a Variable Optical Attenuator (VOA) are combined and the like can be applied.

### Second Example Embodiment

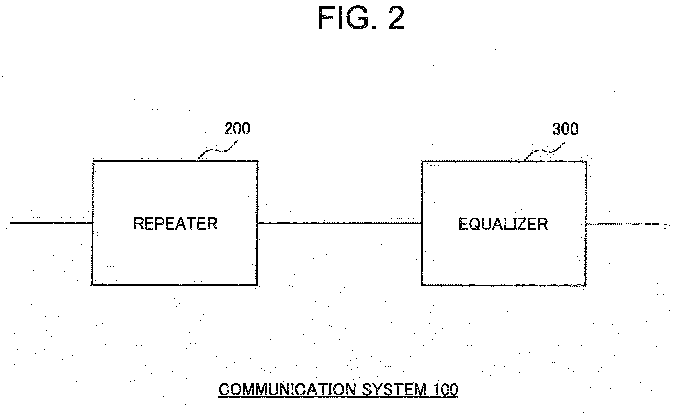

The second example embodiment will be described. A block diagram of a communication system according to the present example embodiment is illustrated in FIG. 2. In the communication system 100 of FIG. 2, a repeater 200 and the equalizer 300 are arranged on an optical transmission path. As the communication system 100, an optical submarine system for sending and receiving a WDM light signal can be used, for example. In an optical submarine system, it is preferable to make light intensity for each wavelength of a WDM light signal be constant because, when there is wavelength dependency in the light intensity of a WDM light signal, it leads to decrease of a transmission distance and a transmission band.

The repeater 200 amplifies an inputted WDM light signal to a desired intensity level and outputs the amplified WDM signal. A structure in which erbium doped fiber amplifiers (EDFA) are arranged in a multiple-stage manner can be used for the repeater 200, for example. Since an EDFA uses amplification action of an input optical signal by stimulated emission of an erbium ion, its gain-wavelength characteristic is not flat, and the wavelength dependency is caused in the light intensity by a WDM light signal passing the EDFA.

The equalizer 300 is arranged in a stage before or behind the repeater 200, and has loss-wavelength characteristic (hereinafter, it is described as a loss profile) opposite to the gain-wavelength characteristic of the repeater 200. Accordingly, by a WDM light signal passing the repeater 200 and the equalizer 300, the light intensity is amplified to a desired level and the light intensity for each wavelength is flattened. The equalizer 300 according to the present example embodiment has a wavelength selective switch (WSS) used in a Reconfigurable Optical Add/Drop Multiplexer (ROADM) system and the like.

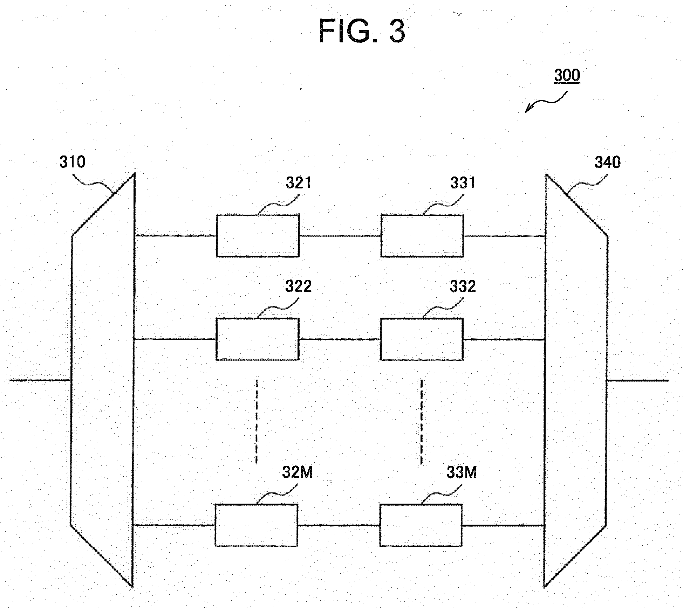

An example of a block diagram of the equalizer 300 when applying a WSS as the equalizer 300 is illustrated in FIG. 3. The equalizer 300 of FIG. 3 includes a 1:M wavelength demultiplexing unit 310, M filter units 321-32M, M optical switch units 331-33M and an M:1 wavelength multiplexing unit 340.

The 1:M wavelength demultiplexing unit 310 divides an inputted WDM light signal for each wavelength, and outputs the divided light signals to the M filter units 321-32M, respectively.

Output characteristics for canceling the gain-wavelength characteristic of the repeater 200 are set to the filter units 321-32M, respectively, by a setting means which is not illustrated in FIG. 3. The filter units 321-32M each perform a filtering process of a light signal which has been inputted according to the output characteristics having been set.

Based on instructions from the setting means which is not illustrated in FIG. 3, the optical switch units 331-33M each perform a switching process of a corresponding light signal of a predetermined wavelength that has been inputted from the filter units 321-32M. By performing, in the optical switch units 331-33M, switching process of a light signal to which filtering process has been performed in the filter units 321-32M for each wavelength, light signals of predetermined wavelengths for which the whole of the gain-wavelength characteristic of the repeater 200 have been canceled are outputted from the optical switch units 331-33M.

The M:1 wavelength multiplexing unit 340 multiplexes light signals for each wavelength outputted from the optical switch units 331-33M, and outputs as a WDM light signal.

This is not limited to setting output characteristics for canceling the gain-wavelength characteristic of the repeater 200 to the filter units 321-32M, respectively, and to performing switching process of the output from the filter units 321-32M in the optical switch units 331-33M. For example, by a setting means which is not illustrated in FIG. 3, a multiplexing/demultiplexing ratio in the 1:M wavelength demultiplexing unit 310 or the M:1 wavelength multiplexing unit 340 can be adjusted in such a way that the gain-wavelength characteristic of the repeater 200 are canceled.

As mentioned above, by composing the equalizer 300 by including a WSS, output characteristics to be set to the filter units 321-32M and switching process in the optical switch units 331-33M can be adjusted easily, and the most suitable loss profile according to the gain-wavelength characteristic of the repeater 200 can be added to the equalizer 300 certainly. Then, by composing the equalizer 300 by a WSS, the equalizer 300 that has been designed separately for each set of characteristics of WDM light signals and a usage environment of the repeater 200 can now be standardized. In this case, the number of pieces of the equalizer 300 and spare devices of the equalizer 300 can be reduced, and, as a result, the price of the communication system 100 can be lowered.

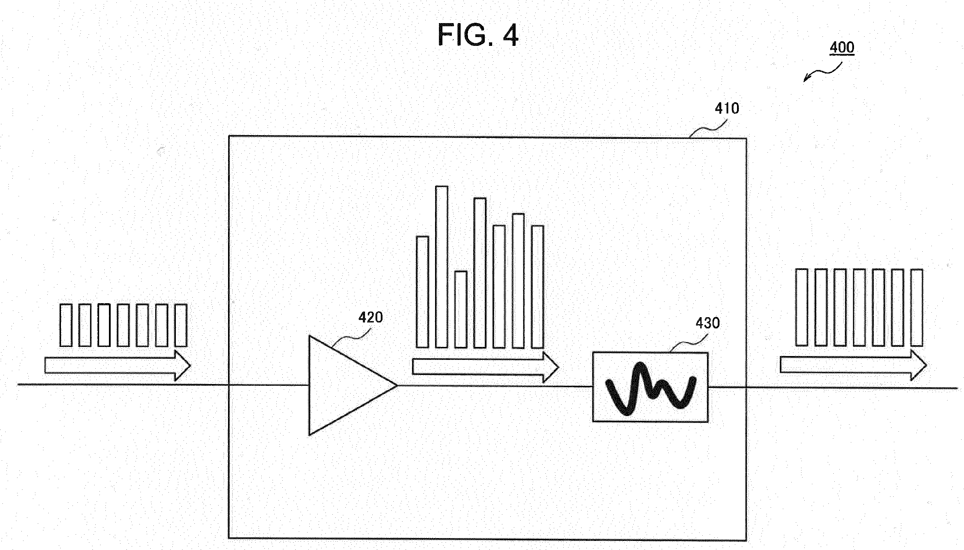

Here, the equalizer 300 can also be arranged inside the repeater 200. A block diagram of this case's repeating device 400 is illustrated in FIG. 4. As illustrated in FIG. 4, an EDFA 420 that amplifies a WDM light signal and a WSS 430 that equalizes the gain-wavelength characteristic of the EDFA 420 are arranged in a cascade manner inside a chassis 410 of the repeating device 400. The EDFA 420 functions like the above-mentioned repeater 200, and the WSS 430 functions like the above-mentioned equalizer 300.

The repeating device 400 of FIG. 4 can be used as a spare repeating device, for example. A loss profile is adjusted for the WSS 430 arranged inside the chassis 410 in such a way that a spectrum of a WDM light signal outputted from the EDFA 420 becomes flat. Accordingly, by a WDM light signal passing the repeating device 400, light intensity is amplified to a desired level in the state that light intensity for each wavelength have been flattened.

Here, by changing the loss profile set to the WSS 430, the repeating device 400 of FIG. 4 further can change a wavelength band used in the repeating device 400. The repeating device 400 of FIG. 4 can adjust its use wavelength band to the wavelength band used in an existing system, and, therefore, the repeating device 400 can be commonly used in various systems having different signal bands.

### <The third example embodiment>

In the second example embodiment, the repeater 200 includes an EDFA. As already described, since an EDFA is using amplification of an input optical signal by stimulated emission of an erbium ion, when the light intensity level of an inputted WDM light signal or the operating temperature of the EDFA changes, the gain-wavelength characteristic of the EDFA also changes. Here, a spectrum change in a WDM light signal will be described when the light intensity level of an inputted WDM light signal or the operating temperature of an EDFA changes.

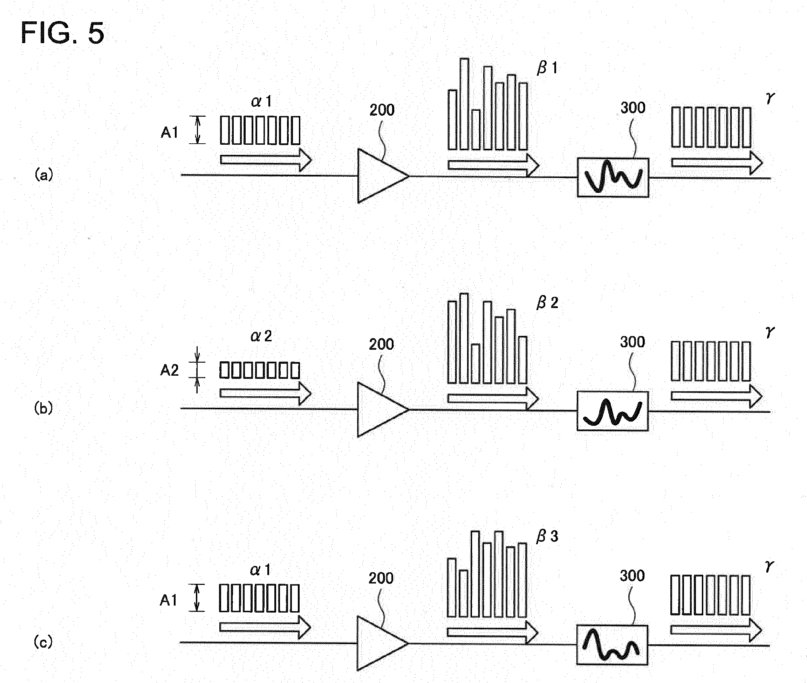

A change in wavelength characteristic of light intensity when a WDM light signal passes the communication system 100 of FIG. 2 described in the second example embodiment in a steady state is illustrated in FIG. 5 (a). Further, a change in wavelength characteristic of light intensity when a WDM light signal having light intensity different from that of the WDM light signal of FIG. 5 (a) passes the communication system 100 is illustrated in FIG. 5 (b), and a change in wavelength characteristic of light intensity of a WDM light signal when the repeater 200 is operating at a temperature different from that of the case of FIG. 5 (a) is illustrated in FIG. 5 (c).

In FIG. 5 (a), by inputting a WDM light signal of a spectrum α1 in which the intensity level of each wavelength is of a constant level A1 to the repeater 200, the light intensity of the WDM light signal is amplified, and a WDM light signal of a spectrum β1 to which the gain-wavelength characteristic of the repeater 200 has been added is outputted. The WDM light signal of the spectrum β1 further passes the equalizer 300 to which a loss profile opposite to the gain-wavelength characteristic of the repeater 200 has been set. As a result, the gain-wavelength characteristic added in the repeater 200 are compensated, the light intensity is amplified to a desired level, and a WDM light signal of a spectrum γ having constant light intensity for each wavelength is outputted.

On the other hand, as shown in FIG. 5 (b), in an EDFA constituting the repeater 200, when the light intensity level of an inputted WDM light signal changes, the gain-wavelength characteristic of the EDFA also change. For example, by inputting a WDM light signal of spectrum α2 in which the intensity level of each wavelength is a constant level A2 (<A1) to the repeater 200, a WDM light signal of a spectrum β2 different from that of FIG. 5 (a) is outputted. The WDM light signal of spectrum β2 further passes the equalizer 300 to which a loss profile opposite to the gain-wavelength characteristic of the repeater 200 has been set. As a result, the light intensity is amplified to a desired level, and a WDM light signal of the spectrum γ having a constant light intensity for each wavelength is outputted.

As illustrated in FIG. 5 (c), when the operating temperature of the repeater 200 changes due to a surrounding temperature change, the gain-wavelength characteristic of the repeater 200 changes. Accordingly, even if a WDM light signal of the spectrum α1 in which the intensity level of each wavelength is the constant level A1, which is the same as that of FIG. 5 (a), is inputted to the repeater 200, a WDM light signal of a spectrum β3 different from that of FIG. 5 (a) is outputted. The WDM light signal of the spectrum β3 further passes the equalizer 300 to which a loss profile opposite to the gain-wavelength characteristic of the repeater 200 has been set. As a result, the light intensity is amplified to a desired level and a WDM light signal of the spectrum γ having a constant light intensity for each wavelength is outputted.

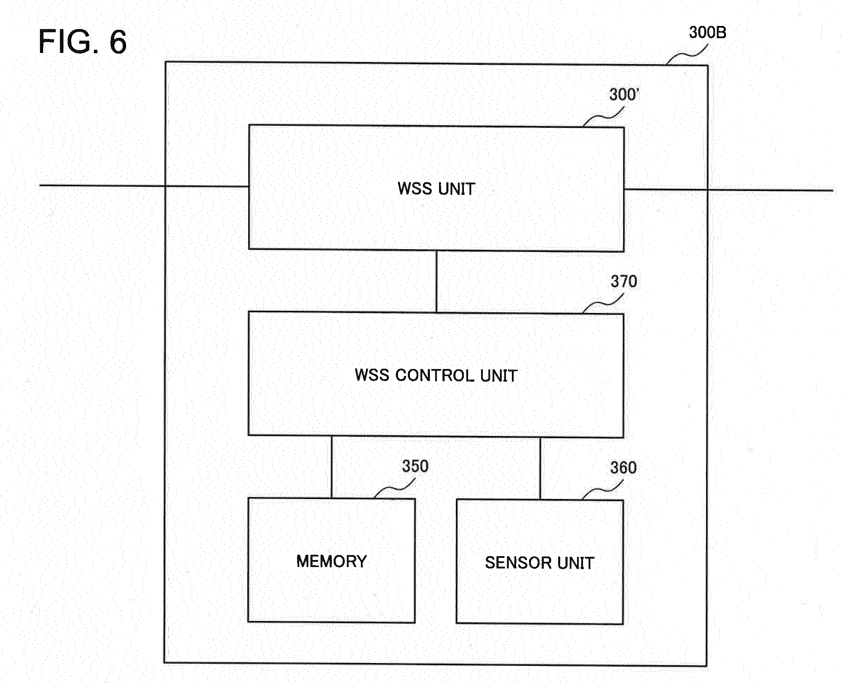

Accordingly, in the third example embodiment, after beginning operations of the repeater 200 and the equalizer 300, the loss profile to be set to the equalizer is changed flexibly according to a change in the light intensity level of an inputted WDM light signal and/or the operating temperature of the repeater 200. A block diagram of an equalizer according to the present example embodiment is illustrated in FIG. 6. An equalizer 300B of FIG. 6 includes a WSS unit 300', a memory 350, a sensor unit 360 and a WSS control unit 370.

The WSS unit 300' is configured to add a loss profile to a WDM light signal, and the equalizer 300 (the 1:M wavelength demultiplexing unit 310, the filter units 321-32M, the optical switch units 331-33M and the M:1 wavelength multiplexing unit 340) of FIG. 3 described in the second example embodiment or the like can be used.

A plurality of loss profiles associated with light intensity levels of a WDM light signal and operating temperatures of the repeater 200, respectively, are registered in the memory 350.

The sensor unit 360 is arranged close to the repeater 200, measures the light intensity level of a WDM light signal inputted to the repeater 200 and the operating temperature of the repeater 200, and outputs a measurement result to the WSS control unit 370.

When the WSS control unit 370 detects that the equalizer 300B is connected to an equalizer control device, which is not illustrated, at the time of shipment from a factory, at the time of a laying operation on shipboard, or at the time of parameter change after the laying, the WSS control unit 370 acquires loss profiles from the equalizer control apparatus and registers the acquired loss profiles with the memory 350. Furthermore, the WSS control unit 370 reads a loss profile that corresponds to a measurement result inputted from the sensor unit 360 from the memory 350, and sets the read loss profile to the WSS unit 300'.

Meanwhile, after loss profiles have been registered with the memory 350 as a result of connecting the equalizer 300B to the equalizer control device, the connection between the equalizer 300B and the equalizer control device is cut. Here, the equalizer control device acquires light intensity levels of a WDM light signal of the repeater 200 of a compensation target and gain-wavelength characteristic when the operating temperature changes, respectively, by simulation, measurement or the like, and calculates loss-wavelength characteristic opposite to the gain-wavelength characteristic that have been acquired, and holds the loss-wavelength characteristic as a loss profile to be set to the equalizer 300B.

After having been arranged on an optical transmission path, the equalizer 300B configured as above begins, in the sensor unit 360, measurement of the light intensity level of a WDM light signal and measurement of the operating temperature of the repeater 200. Then, the WSS control unit 370 reads from the memory 350 a loss profile corresponding to a measurement result inputted from the sensor unit 360, and sets the read loss profile to the WSS unit 300'.

The equalizer 300B according to the present example embodiment can change a loss profile to be added to a WDM light signal appropriately in response to the light intensity level of the WDM light signal, the operating temperature of the repeater 200, and/or the like. Accordingly, the equalizer 300B can be standardized irrespective of specifications of light intensity of a WDM light signal and an operating temperature, and the number of reserves of the equalizer 300B to be used for gain equalization can be reduced.

Furthermore, the equalizer 300B of the present example embodiment acquires a loss profile from an external equalizer control device and registers it with the memory 350 in advance, and, at the time of an operation, reads an appropriate loss profile from the memory 350 and sets it to the WSS unit 300'. Since a loss profile is not generated in the equalizer 300B, and the equalizer 300B needs only to read the appropriate loss profile from the memory 350 and set it to the WSS unit 300', the processing in the equalizer 300B can be reduced, and the structure of the equalizer 300B can be simplified.

In the equalizer 300B according to the present example embodiment, a connection between the equalizer 300B and an equalizer control device is cut after loss profiles have been registered with the memory 350. In this case, it can be suppressed that a loss profile is changed by mistake after installing the equalizer 300B on an optical transmission path, and thus a highly reliable system can be provided.

Meanwhile, the equalizer 300B and an equalizer control device can be configured in a manner capable of performing wireless communication. In this case, when the repeater 200 is replaced with a repeater 200' having the gain-wavelength characteristic different from those of the repeater 200 due to a failure or the like, for example, a loss profile associated with the repeater 200' can be transmitted from the equalizer control device to the equalizer 300B that is in use and has been arranged on the optical transmission path.

By receiving loss profiles associated with the repeater 200' from the equalizer control device, the equalizer 300B overwrites the loss profiles associated with the repeater 200 registered with the memory 350 by the received loss profiles and sets the received loss profiles associated with the repeater 200' to the WSS unit 300'.

When the equalizer 300B and the equalizer control device are configured in such a way that the equalizer 300B and the equalizer control device can send and receive a loss profile by wireless communication or the like, the light intensity level of a WDM light signal which passes the repeater 200 and the equalizer 300 can also be adjusted by remote control operation.

### <The fourth example embodiment>

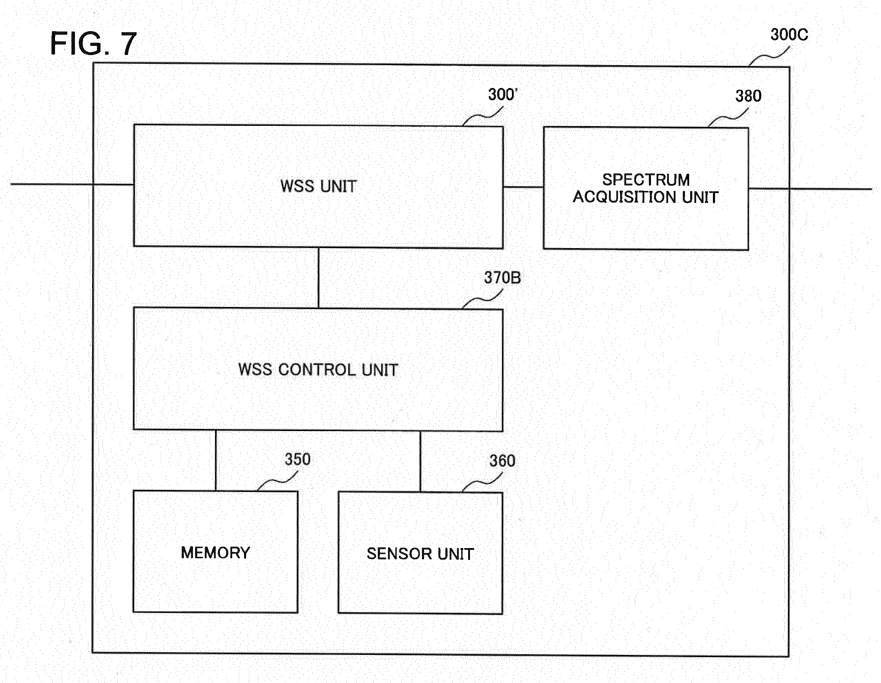

The fourth example embodiment will be described. A block diagram of an equalizer according to the present example embodiment is illustrated in FIG. 7. An equalizer 300C of FIG. 7 includes the WSS unit 300', the memory 350, the sensor unit 360, a WSS control unit 370B and a spectrum acquisition unit 380.

The spectrum acquisition unit 380 acquires a spectrum of a WDM light signal which has passed the repeater 200, which is not illustrated in FIG. 7, and the WSS unit 300', and outputs an acquisition result to the WSS control unit 370B. The WSS control unit 370B adjusts a loss profile to be set to the WSS unit 300' in such a way that a spectrum inputted from the spectrum acquisition unit 380 becomes flat.

By performing feedback control of setting of a loss profile to the WSS unit 300' in such a way that the spectrum of a WDM light signal which has passed the repeater 200 and the WSS unit 300' becomes flat, a high-quality WDM light signal is outputted from the repeater 200 and the equalizer 300C.

### Fifth Example Embodiment

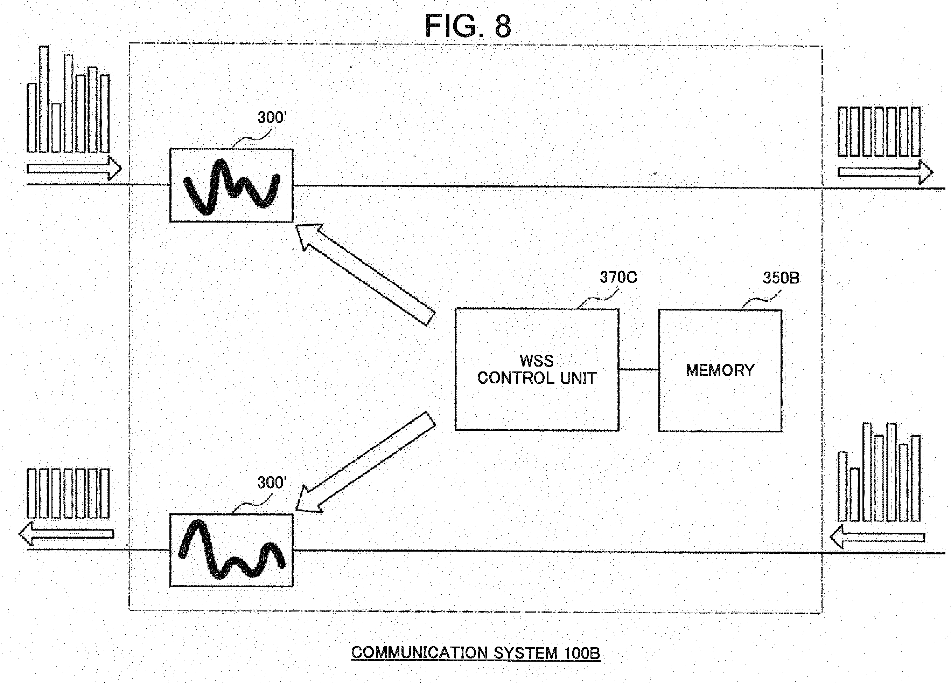

The fifth example embodiment will be described. A system configuration diagram of a communication system according to the present example embodiment is illustrated in FIG. 8. In a communication system 100B of FIG. 8, a repeater which are not illustrated and the WSS unit 300' are arranged on each of a plurality of optical transmission paths. Then, a plurality of WSS unit 300' are controlled by a WSS control unit 370C.

Loss profiles for compensating gain- wavelength characteristic about a plurality of repeaters arranged respectively on a plurality of optical transmission paths are registered with a memory 350B. The WSS control unit 370C reads a loss profile associated with a repeater of a compensation target from the memory 350B, and sets it to the corresponding WSS unit 300B.

By sharing the memory 350B and the WSS control unit 370C by a plurality of WSS unit 300', a low cost system can be provided.

The present invention is not limited to the above-mentioned example embodiments, and even if there is a change and the like in the design within the range that does not deviate from the gist of this invention, it is included in this invention.

This application claims priority based on Japanese application Japanese Patent Application No. 2015-167396 filed on August 27, 2015, the disclosure of which is incorporated herein in its entirety by reference.

### [Reference signs List]

10 Equalizer
20 Wavelength selection switch means
30 Setting means
100 and 100B Communication system
200 Repeater
300, 300B and 300C Equalizer
300' WSS unit
310 1:M wavelength demultiplexing unit
321-32M Filter unit
331-33M Optical switch unit
340 M:1 wavelength multiplexing unit
350 and 350B Memory
360 Sensor unit
370, 370B and 370C WSS control unit
380 Spectrum acquisition unit
400 Repeating device
410 Chassis
420 EDFA
430 WSS

## Claims

1. An equalizer, comprising:
a wavelength selection switch means for outputting an inputted wavelength division multiplexed optical signal after adding a loss profile having been set;
a setting means for acquiring setting information that is information for flattening a spectrum of a wavelength division multiplexed optical signal outputted from the wavelength selection switch means, and setting a loss profile to the wavelength selection switch means based on the setting information.

2. The equalizer according to claim 1,
wherein
the wavelength selection switch means adds, in a state being arranged on an optical transmission path in a cascade manner with an amplifier, a loss profile having been set to an inputted wavelength division multiplexed optical signal, and
wherein
the setting information is information for flattening a spectrum of the wavelength division multiplexed optical signal having passed the wavelength selection switch means and the amplifier.

3. The equalizer according to claim 2, further comprising:
a detection means for detecting and outputting an operation state of the amplifier; and a memory for storing a plurality of pieces of setting information each associated with the operation state, wherein
when the operation state is inputted, the setting means further reads setting information from the memory associated with the operation state inputted, and updates the loss profile based on the setting information read from the memory.

4. The equalizer according to claim 3,
wherein
a plurality of the wavelength selection switch means is included, and
wherein
each of the plurality of the wavelength selection switch means is disposed on each of a plurality of optical transmission paths, and the setting means updates the loss profile set to each of the plurality of the wavelength selection switch means based on the setting information read from the memory.

5. The equalizer according to any one of claims 2 to 4, further comprising
a spectrum acquisition means for acquiring a spectrum of a wavelength division multiplexed optical signal having passed the wavelength selection switch means and the amplifier, wherein
the setting means further adjusts the loss profile set to the wavelength selection switch means in such a way that an acquired spectrum is flattened.

6. The equalizer according to any one of claims 2 to 5, wherein the amplifier is an Erbium Doped Fiber Amplifier (EDFA).

7. The equalizer according to any one of claims 1 to 6, wherein the wavelength selection switch means includes:
a wavelength demultiplexing means for demultiplexing an inputted wavelength division multiplexed optical signal for each wavelength and outputting a plurality of light signals;
a filter means for performing a filtering process on each of the plurality of demultiplexed light signals according to the loss profile having been set;
a switching means for performing a switching process on each of the plurality of demultiplexed light signals according to the loss profile having been set; and
a wavelength multiplexing means for multiplexing and outputting a plurality of light signals that have undergone the filtering process and the switching process.

8. A repeater, comprising:
an amplifying means for amplifying light intensity of a wavelength division multiplexed optical signal inputted and outputting the wavelength division multiplexed optical signal amplified;
an equalizer including a wavelength selection switch means for adding a loss profile having been set to the wavelength division multiplexed optical signal inputted and outputting the wavelength division multiplexed optical signal being added the loss profile, and a setting means for acquiring setting information that is information for flattening a spectrum of a wavelength division multiplexed optical signal to be outputted from the repeater and updating the loss profile set to the wavelength selection switch means based on the setting information; and
a chassis containing in its interior the amplifying means and the equalizer arranged in a cascade manner.

9. A communication system, comprising:
an amplifying means for amplifying light intensity of a wavelength division multiplexed optical signal inputted and outputting the wavelength division multiplexed optical signal amplified;
an equalizer including a wavelength selection switch means for adding to the wavelength division multiplexed optical signal inputted a loss profile having been set and outputting the wavelength division multiplexed optical signal being added the loss profile and a setting means for updating the loss profile having been set to the wavelength selection switch means based on the acquired setting information, wherein
the amplifying means and the equalizer are arranged in a cascade manner, and the setting information is information for flattening a spectrum of a wavelength division multiplexed optical signal having passed the amplifying means and the wavelength selection switch means.

10. An equalization method, comprising:
adding, to a wavelength division multiplexed optical signal inputted to a wavelength selection switch means, a loss profile that has been set;
acquiring setting information that is information for flattening a spectrum of a wavelength division multiplexed optical signal outputted from the wavelength selection switch means; and
setting a loss profile to the wavelength selection switch means based on the setting information.
